# EUROPEAN PATENT SPECIFICATION

(11) **EP 4 100 711 B1**
(45) Date of publication and mention of the grant of the patent: **25.12.2024**
(21) Application number: 21704614.3
(22) Date of filing: 04.02.2021
(51) Int. Cl.: G01M 5/00, E01D 19/00, G08G 1/00, E01D 22/00, G08G 1/01

(54) **METHOD OF MONITORING HEALTH STATUS OF BRIDGES IN NORMAL TRAFFIC CONDITIONS**
VERFAHREN ZUR ÜBERWACHUNG DES GESUNDHEITSZUSTANDES VON BRÜCKEN UNTER NORMALEN VERKEHRSBEDINGUNGEN
PROCÉDÉ DE SURVEILLANCE DE L'ÉTAT DE SANTÉ DE PONTS EN CONDITIONS NORMALES DE CIRCULATION

(30) Priority: 05.02.2020 CH 1302020
(43) Date of publication of application: 14.12.2022
(73) Proprietor: Sensima Inspection Sàrl, 1196 Gland (CH)
(72) Inventor: LANY, Marc, 1180 Rolle (CH); MONNIER, Frédéric, 2016 Cortaillod (CH); SANTI, Gilles, 1007 Lausanne (CH); REVAZ, Bernard, 1205 Genève (CH)
(74) Representative: P&TS SA (AG, Ltd.)
(86) International application number: PCT/IB2021/050904
(87) International publication number: WO 2021/156784

(56) References cited:
- CN-A- 106 197 911
- CN-A- 108 765 894
- CN-A- 109 118 776
- CN-A- 110 132 511
- US-A1- 2010 310 128
- US-A1- 2015 198 502
- US-A1- 2015 338 305
- US-A1- 2018 067 637
- US-A1- 2018 164 093
- US-A1- 2018 209 883
- US-B1- 6 240 783

## Description

### Field of the invention

The present invention relates to a method of monitoring health status of bridges taking advantage of normal traffic conditions, in particular for detecting a degraded condition of the structure requiring special attention.

### Description of related art

The global aging of bridges is accelerated not only by the growth of the traffic and the associated loads but also by the lack of public funds needed for bridge maintenance in order to maintain existing bridges in safe conditions.

Bridge maintenance is based on a slow process, requiring experts to define the workplan of the maintenance and analyse the data. As these experts are a scarce resource and as a lot of structures have been built 50 years ago, the number of bridges that can be qualified as poor will grow in the upcoming years, thus increasing the probability of failures.

Several methods for monitoring the integrity of bridges have already been proposed.

Reliable measurement of load-dependent deformations is necessary in connection with test loads in order to determine the actual load-deformation response of the structure under investigation with the aim of evaluating the currently available load-bearing capacity or identifying characteristic classification features, the reliable verification of which can be used to draw conclusions about certain design features and associated specific load-bearing reserves.

DE102004014246 discloses a method for determining load-dependent structural deformations, in particular on bridges, in which defined loads with vehicles of known masses are applied to the structure to be investigated and the resulting deformations on the structure are determined. The time and cost involved in preparing and carrying out an experimental load safety assessment is significantly reduced compared to other method of evaluating the integrity of a bridge.

However, the above method shares the same major inconvenient with other methods for monitoring a health status of bridges, i.e. the bridge must be closed to traffic when such monitoring is performed, which has a negative impact on the traffic.

Methods for monitoring a health status of bridges under normal traffic condition to address the above inconvenient already exist.

For example, CN106197911 discloses a bridge load testing method wherein the following steps are conducted under normal traffic condition: (1) a dynamic weighing system is arranged at the bridge head of a bridge, and the measuring content comprises the axle distances and the axle weights of passing vehicles; (2) a plurality of shooting devices are arranged on the bridge for full-bridge shooting, and position distribution of the vehicles on the bridge is measured; (3) sensors are arranged on the bridge, and static load parameters and dynamic parameters of the bridge structure are measured; (4) the data acquisition time of the full-bridge shooting devices in step (2) and the data acquisition time of the sensors in the step (3) are synchronized, and (5) the load bearing capacity of the bridge is evaluated.

CN108765894 discloses a bridge health condition monitoring system comprising an intelligent video monitoring system disposed at the entrance of a bridge. The system is configured to monitor the health state of the bridge in real time regardless of the traffic flow.

US2015/198502 discloses an in-situ method for determining bridge load ratings under ambient traffic. The method comprises: installing one or more gauges on one or more bridge support members; selecting a batch of readings from the one or more gauges resulting for a detected vehicle; selecting one or more vehicles from a database based on one or more parameters of the detected vehicle; calibrating a bridge load rating model based on at least one factor relating to the collected batch of strain readings and the selected one or more vehicles; and acquiring a bridge load rating distribution from the calibrated bridge load rating model.

CN110132511 discloses a bridge structure monitoring method. A deflection sensor is arranged to collect a mid-span-deflection change parameter at a specified position of a monitored bridge, and meanwhile, a video shooting device acquires images of vehicles which pass through the bridge. The mid-span deflections that exceed a set threshold value are selected from the bridge monitoring data, and meanwhile, an automatic or manual image recognition method is adopted to screen out loaded vehicle images of the same specific type from the vehicle images. A sequence value of the sampling deflection which is changed along with the time is obtained, and linear fitting is carried out through a least square method, so that the bridge dynamic deflection and the attenuation rate coefficient of structural rigidity are obtained.

US2018/209883 discloses a rigidity measurement apparatus adapted to measure rigidity of an object and includes a load estimator, a displacement calculator and a rigidity calculator. The load estimator is used to estimate a load applied to a measurement point set on the object by using a captured image of the object. The displacement calculator is used to calculate a displacement of the measurement point by using the captured image. The rigidity calculator is used to calculate the rigidity of the object by using the load and the displacement.

US6'240'783 discloses a bridge monitoring system that uses laser light reflected from the structural members of a bridge to create velocity and displacement time signals of the bridge's vibratory response to quiescent conditions, and that converts the sensed velocity and displacement time data to frequency domain data to provide a "signature" waveform for the bridge indicative of its structural characteristics.

US2010/310128 discloses a computer-implemented method for measuring full field deformation characteristics of a deformable body. The method includes determining optical setup design parameters for measuring displacement and strain fields and generating and applying a dot pattern on a planar side of a deformable body. A sequence of images of the dot pattern is acquired before and after deformation of the body. The characteristic points of the dots are determined and matched between two or more of the sequential images. The displacement vector of the characteristic points is found to estimate the full field displacement based on the displacement vector of the characteristic points.

An aim of the present invention is to provide an alternative method for monitoring a health status of bridges under normal traffic condition.

Another aim of the present is to provide a method for inspection of bridges which is easy to implement.

A further aim of the present invention is to provide a method for inspection of bridges which is cost-effective to implement.

### Brief summary of the invention

According to the invention, these aims are achieved by means of a method for monitoring the health status of one or more bridges under normal traffic condition, comprising:
a) providing at least one sensing device per bridge configured to measure a physical quantity variation related to the integrity of said one or said plurality of bridges;
b) providing a fleet of heavy vehicles, wherein an estimation of the weight of each heavy vehicle is known with a deviation of no more than 10% of the actual weight of each heavy vehicle,
c) acquiring a set of physical data related to the integrity of said one or said plurality of bridges from said at least one sensing device when at least one heavy vehicle of the fleet crosses one bridge;
d) determining the configuration of other vehicles on the bridge, if any, when said at least one heavy vehicle crosses said one bridge;
e) repeating steps c) and d) in order to acquire multiple sets of physical data related to the integrity of said one or said plurality of bridges so that the number of sets of integrity data associated with one bridge permits to measure or observe a deviation, and
f) obtaining a health status of said one or said plurality of bridges based on the deviation between said multiple sets of physical data associated with one bridge, wherein the at least one sensing device is a vision-based displacement measuring system.

In an embodiment, the at least one vision-based displacement measuring system is configured to measure relative or absolute displacement of one or more regions of interest of one bridge when at least one heavy vehicle crosses said one bridge to acquire said set of physical data related to the integrity of said one bridge.

In an embodiment, the at least one vision-based displacement measuring system is an optical-based measuring system selected from the group comprising laser telemetry, laser interferometry, one or more 2D or 3D cameras, a 3D scanning device or any optical device able to produce 2D or 3D images in the visible and infra-red spectrum of said one or more regions of interest.

In an embodiment, the vison-based displacement measuring system comprises an illumination device configured for illuminating the one or more regions of interest in the near-infrared spectrum. At least one reference mark is applied on said one or more regions of interest. The at least one reference mark exhibits high contrast within the near-infrared spectrum to optimize identification of one or more points of interest to be able to measure their displacement.

In an embodiment, at least one optical corner reflector is positioned on a point of interest to achieve high contrast.

In an embodiment, the vision-based displacement measuring system comprises a camera and an image processing module. The processing module is configured to compute the position of at least one point of interest of said one or more regions of interest in the image plane of the camera and to identify any obstruction between the camera and the point of interest(s) in the one ore regions of interest in said one bridge by comparing a reference image plane to a current image plane of said point of interest.

In an embodiment, each of said multiple sets of physical data is weighted based on the configuration of said one or more other vehicles, if any, on one bridge when said at least one heavy vehicle crosses said one bridge.

In an embodiment, the configuration of said other vehicles on the bridge relates to the location and estimated weight of each of said other vehicle relative to said at least one heavy vehicle.

In an embodiment, said multiple sets of integrity data are stored in a database for each of said plurality of bridges, the health status of each bridge being classified according to the severity of said deviation, each classification corresponding to a deviation exceeding a given threshold.

In an embodiment, an itinerary is provided to one or more heavy vehicles of the fleet such that said one or more heavy vehicles cross one or more bridges in order to acquire one or more sets of integrity data to increase the statistical relevance of the integrity data of these bridges.

In an embodiment, each heavy vehicle of the fleet is equipped with a vision-based system to capture one image or a series of images of the surrounding traffic to determine the number and the configuration of said other vehicles on one bridge when said heavy vehicle crosses said one bridge.

In an embodiment, the total weight of said number of other vehicles is estimated based on said one or said series of images of the surrounding traffic.

In an embodiment, a set of integrity data of a portion of one bridge is acquired by the at least one sensing device when one heavy vehicle is positioned in the middle of a span of said one bridge.

In an embodiment, the method further comprises the step of providing a vision-based system positioned on the bridge or on each bridge and configured to capture one image or a series of images of the traffic on the bridge or on each bridge when at least one heavy vehicle of the fleet crosses said one bridge.

In an embodiment, a trajectory and/or the speed of at least one heavy vehicle is inferred from said series of images.

In an embodiment, said trajectory and/or said speed is used in combination with at least one sensing device output to determine an effective dynamic load coefficient.

In an embodiment, said vision-based displacement system is configured to also capture one or more images of the traffic on the bridge in order to determine the configuration of said other vehicles on one bridge when said heavy vehicle crosses said one bridge.

In an embodiment, one or more properties of one heavy vehicle of the fleet which crosses the at least one bridge may be retrieved from a database. The one or more properties may be selected from the group of properties comprising the total weight of the heavy vehicle, the weight per axle and the number of axle. The integrity data obtained from the at least one sensing device when said heavy vehicle crosses the bridge are weighted and/or corrected by a factor correlated to said one or more properties.

In an embodiment, one or more further properties of the heavy vehicle, selected from the group of properties comprising the type of the tires, the pressure of the tires, and the speed of the heavy vehicle, may be retrieved from said database.

In an embodiment, the heavy vehicle of the fleet crossing the bridge weight less than 20%, preferably less than 10% and even more preferably less than 5% of the maximum weight allowed by the bridge.

According to the invention, the weight of each heavy vehicle of the fleet is more than 10 tonnes, preferably more than 20 tonnes and even more preferably more than 30 tonnes.

In an embodiment, the weight of one heavy vehicle of the fleet is measured by a weight sensor located under a surface on which the heavy vehicle stays or travels.

In an embodiment, a unique identifier is assigned to each heavy vehicle of the fleet under step b), and wherein a presence of one or more heavy vehicles of the fleet on one bridge is determined by detecting and/or recognizing said unique identifier.

### Brief Description of the Drawings

The invention will be better understood with the aid of the description of an embodiment given by way of example and illustrated by the figures, in which:
- Figure 1 shows a schematic side view of a bridge with one heavy vehicle crossing the bridge according to an embodiment;
- Figure 2a shows an enlarged view of a region of interest of the bridge when no heavy vehicle is on the bridge;
- Figure 2b shows an enlarged view of the region of interest of Figure 2 while the heavy vehicle is crossing the bridge;
- Figure 3 shows a schematic side view of a bridge with one heavy vehicle crossing the bridge with other light vehicles according to another embodiment;
- Figure 4 shows a top view of the bridge of Figure 1;
- Figure 5 shows a similar view of Figure 4 with a different traffic configuration;
- Figure 6 shows a similar view of Figures 4 and 5 with another traffic configuration,
- Figure 7 shows a similar view of Figures 4, 5 and 6 with another traffic configuration, and
- Figure 8 shows a schematic view of a vison-based displacement measuring system according to an embodiment.

### Detailed Description of possible embodiments of the Invention

In the context of the present invention, monitoring the health status of one or more bridges *"under normal traffic condition"* must be understood as the health status of the one or more bridges are monitored while the bridges are open to traffic. In other words, the traffic is not impacted during inspection of bridges. Moreover, the measurement takes advantage of commercial vehicles, in particular trucks, on the bridge.

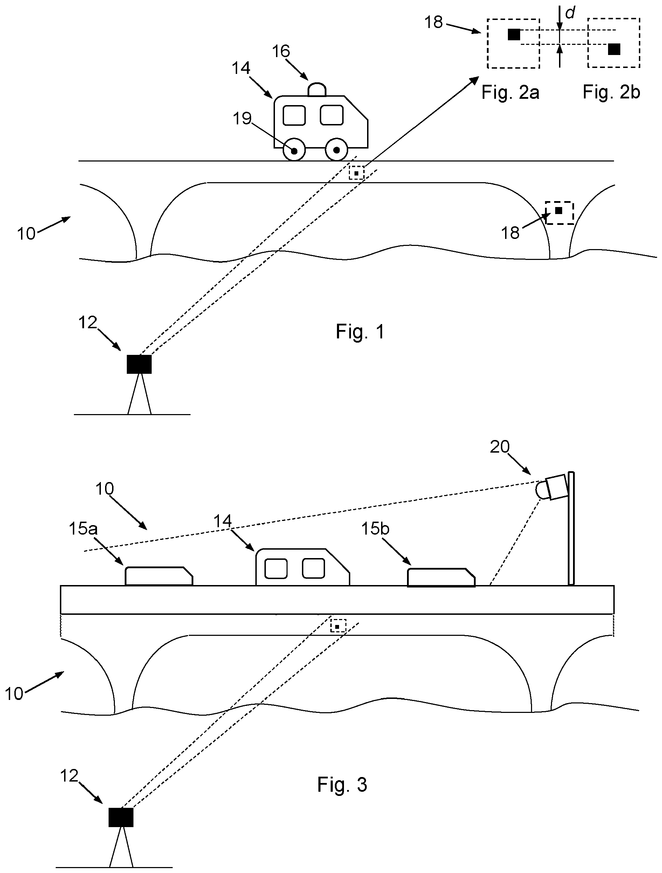

With reference to Figure 1, one heavy vehicle 14 of a fleet of heavy vehicles is crossing a bridge 10. An estimation of the weight of each vehicle 14 of the fleet is known with a deviation of no more than 10% of the actual weight of each heavy vehicle, in particular the weight by axle 19. A sensing device 12 is provided for measuring a physical quantity variation related to the integrity of one or more regions of interest 18 of the bridge 10 when the heavy vehicle 14 of the fleet of heavy vehicles is crossing the bridge 10.

In the illustrated embodiments of Figure 1 and 3, the sensing device is a vision displacement measuring system 12 installed away from the bridge 10 and configured to measure relative or absolute displacement of one or more regions of interest 18 of one bridge when the heavy vehicle 14 crosses the bridge 10. This embodiment adds the advantage that the installation of the vision displacement measuring system 12 has a minimal or even no impact on the traffic. In a non-illustrated embodiment, the vision displacement system may also be mounted on a part of the bridge and oriented in a way to be able to sense the one or more regions of interest.

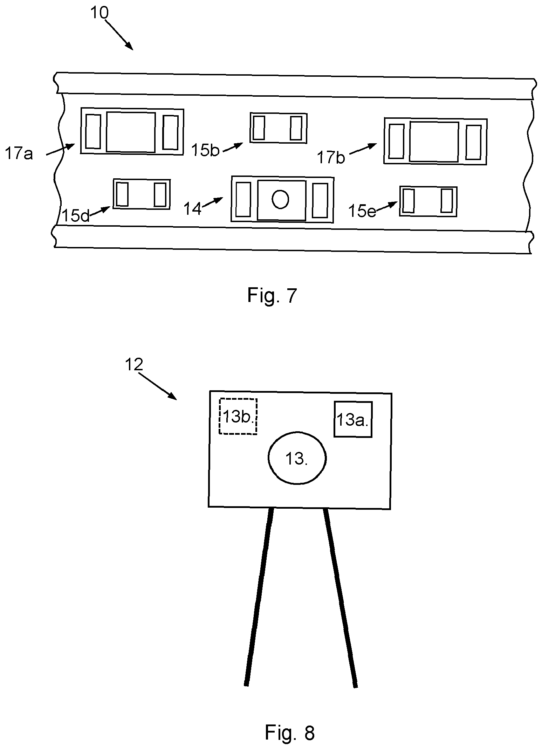

In an advantageous embodiment illustrated in Figure 8, the vision-based displacement measuring system 12 comprises at least one camera 13, for example a CMOS camera with a global shutter, and an illumination device 13a configured for illuminating the one or more regions of interest 18, preferably in the near-infrared spectrum, typically between 700nm and 1000 nm. The camera may be affixed to a part of the bridge or in its vicinity. The illumination device 13a is installed close to the camera axis and its beam angle preferably substantially matches the field of view of the camera. The centre of the illumination device is typically within 100mm of the camera axis.

As shown in Figures 2a, 2b, different type of marks may be applied on the regions of interest 18 to be inspected in order to provide points of interest that may be easily identified for the measurements of their displacements. Marks of appropriate forms may for example be an element of the structure or a painted mark on the region of interest 18 and/or a reflective adhesive sticker. The mark and/or the adhesive sticker are configured to exhibit a high contrast within the spectral range of the camera 13, preferably in the infrared spectrum to clearly identified points of interest whose displacements must be measured. An advantageous way to achieve high contrast is to use retro-reflective paint.

The illumination device 13a preferably configured to produce most of its optical power within a wavelength bandwidth narrower than 100nm. The camera may advantageously comprise a bandpass filter substantially matching the wavelength of the illumination. In other words, the central wavelength of the bandpass filter is within +/- 50 nm of the central wavelength of the light projected by the illumination device 13a on the region(s) of interest 18. The width of the bandpass filter is preferably below 150 nm.

To provide an accurate conversion scale between motions observed in the image plane of the camera and real-world displacements, the region of interest may advantageously exhibit a feature of known dimensions (as with a stadimeter). Another way to obtain this conversion scale is to compute it based on a measurement of the distance between the camera 13 and a point of interest; the known parameters of the camera sensor and optics; and the position of the point of interest in the camera image plane. The point of interest may advantageously comprise at least one optical corner reflector (not shown) with a size between 10mm and 50mm for achieving high contrast.

Additional points of interest may advantageously be assigned to positions considered as substantially fixed relative to the position of the camera. These additional points of interest can be used to compensate for unwanted camera movements, such as changes in camera orientation due to thermal effect (e.g. bending of the camera support due to temperature differences).

The vision-based displacement measuring system 12 may comprise an image processing module 13b. The image processing module 13b is configured to compute the position of the point(s) of interest in the camera image plane and to identify any obstruction between the camera 13 and the point of interest in the region(s) of interest of the bridge. In an advantageous embodiment, both the position of the points of interest in the image and an "obstruction value" are computed using a template matching algorithm. The template matching algorithm may for example use cross-correlation between reference image templates (at least one template per point of interest) and the current image to perform both functions: the position of the point(s) of interest in the image is given by the location of the maximum of the cross-correlation, and obstructions can be detected through a decrease of the maximum value of the cross-correlation. Advantageously, the cross correlation may be performed on up-sampled versions of the template and the image in order to get measurements of the position of point(s) of interest in the image with subpixel resolution (typically 1/100 to 1/200 of a pixel).

Image processing may advantageously be performed in real-time. This has the advantage of drastically reducing the bandwidth requirements of the vision-based displacement measuring system, as only the position of point(s) of interest (either in the image plane or converted to real world coordinates) and error values are transmitted to assess the safety of the bridge, as opposed to the full image information. The results may therefore be efficiently transferred even in the case of a system with limited bandwidth, as it is typically the case for a system transmitting structural health information wirelessly from a remote bridge. In order to reduce both the image transfer and processing time, the pattern matching may advantageously be performed on a subset of the image only. In the case of a rectangular image region, a template matching algorithm is applied on an image subset extracted from the current image in substantially the same image region (e.g. substantially the same pixel coordinate ranges for a rectangular region) as the one used to define the template.

In an embodiment, the vision displacement measuring system 12 may be in communication with a GPS system tracking the position of the heavy vehicles 14 of the fleet such that the measuring system 12 is able to switch from a standby mode to an acquisition mode when one heavy vehicle 14 of the fleet is approaching the bridge 10 to be monitored.

A region of interest 18 may be for example located in the middle of a span of the bridge 10 such that the physical quantity variation related to the integrity of the bridge 10 correspond to the deflection *d* of that region of interest when one heavy vehicle 14 of the fleet runs over that region 18. A region of interest may also be located for example on a pillar of the bridge 10.

In an embodiment, measuring displacements of a region of interest 18 consists in measuring the absolute position of several points of interest (POls) in the reference frame of the camera of the vision displacement measuring system 12 assuming that the camera is fixed. In another embodiment, relative measurements of the distance between several POIs in the region of interest 18 are performed by the vision displacement measuring system 12, wherein one of the POIs is considered as a fixed point with respect to the others. These measurements are time-dependent in order to acquire data regarding the magnitude and the speed of displacement of the POIs with respect to the camera frame or with respect to one fixed POIs, these data being informative of the integrity state of the region of interest 18 that is inspected.

Installing a remote sensing system such as a vision displacement measuring system 12 away from the bridge 10 simplifies the implementation of the method for monitoring the health status of bridges under normal traffic conditions considering that less stringent authorisation or even no authorisation at all is required to set-up the vison displacement measuring system 12. The vision displacement measuring system 12 may use other sensors than the camera described above , for example, an interferometer, a laser rangefinder, a laser flexigraph, a theodolite, , a 3D scanning device or any optical device able to produce 2D or 3D images in the visible and infrared spectrum of the regions of interest 18.

In other embodiments, one or more in-situ sensors may however be mounted on the bridge in the vicinity of the region of interest 18 to measure relative or absolute displacement of POIs within such region. In-situ sensors may be, for example, strain gauges, accelerometers, inclinometers or mechanical flexigraph.

A set of physical data related to the integrity of one or more region of interests 18 of the bridge 10 is acquired by the vision displacement measuring system 12 or by one or more in-situ sensors according to the embodiment when one heavy vehicle 14 of the fleet crosses the bridge. Several sets of physical data related to the integrity of the one or more region of interests 18 are required so that the number of sets of integrity data associated with the bridge 10 permits to measure or observe a deviation which is indicative of the health status of the bridge. These sets of physical data are preferably acquired at different time intervals, typically over several months or years in order to compare the observed deflection with the expected deflection than can be modelled.

For each set of acquired physical data, the configuration of other vehicles on the bridge is estimated considering that the traffic conditions on a bridge vary depending on the month or the week of the year and variations also occurs depending on the day of the week or time of day. The density and speed of the vehicles are therefore different at any given time and has a direct influence on the data related to the integrity of the region(s) of interest 18. The acquired physical data must therefore be weighted based on the traffic configuration on the bridge 10 at the time of the measurements by the vision displacement measuring system 12 or by the one or more in-situ sensors described above in order to obtain robust measurements.

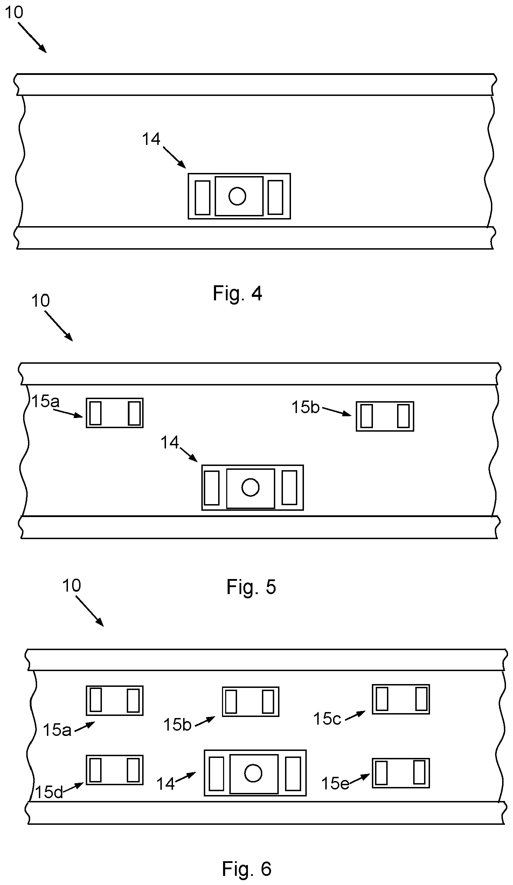

Different traffic configurations on the bridge 10 as shown in Figures 4 to 7 may be estimated by the same vision displacement measuring system 12 used to measure the set of physical data of the one or more regions of interest 18 of the bridge or by one or more independent sensors. The independent sensors may be for example inductive-loop traffic detectors, infrared sensors, ultrasonic sensors, video recorders, etc. In the embodiment illustrated in Figure 3, a camera 20 is mounted above the bridge 10 to monitor the traffic configuration on the bridge.

In an embodiment illustrated in Figure 1, each heavy vehicle 14 of the fleet is equipped with a vision-based system such as a camera 16 configured to capture images of the surrounding traffic in order to estimate the traffic configuration on the bridge 10 to determine to correction factor to be applied to the measured physical data of the one or more region of interest 18 of the bridge 10. This embodiment advantageously simplifies the implementation of the method for monitoring the health status of bridges under normal traffic condition considering that no authorisation is required to set-up the camera 16 of the heavy vehicles 14 of the fleet unlike the camera 20 mounted above the bridge in Figure 3 or the independent sensors described above.

To control the load-bearing capacity of a bridge, different traffic configurations must be taken into account. The traffic configurations may be classified in different categories. A correction factor is determined for each category and applied to the set of physical data acquired for the same category to ensure measurements which are independent from the traffic configuration or at least not significantly dependent therefrom such that measurements may be considered robust. The correction factor therefore varies according to the category and the magnitude of correction to be applied to the set of physical data may vary significantly as a function of the category to ensure robust measurements.

In the context of the present disclosure, the traffic configurations are classified in three distinct categories, i.e. a first category whereby one heavy vehicle 14 of the fleet crosses the bridge with no other vehicles on the bridge as illustrated in Figures 1 and 4, a second category whereby one heavy vehicle 14 of the fleet crosses the bridge while other vehicles 15a, 15b, 15c, 15d, 15e of less than 3,5 tonnes, referred hereafter as light vehicles, are present on the bridge as illustrated in Figures 5 and 6, and a third category whereby one heavy vehicle 14 of the fleet crosses the bridge while one or more vehicles 17a, 17b of more than 30 or 40 tonnes, referred hereafter as trucks, are present on the bridge as illustrated in Figure 7.

The first category is considered as an ideal traffic configuration since only parameters of the heavy vehicle 14 of the fleet must be taken into consideration to determine the load to be applied to the physical data measured by the vision displacement measuring system 12 in order to obtain robust measurements. A load model of the heavy vehicle 14 can indeed be built based on different parameters including in particular the load on each of the tire tracks. This requires knowledge of the axle weight and to a certain extent the inflation and type of tires and the position of them as a function of time. The speed of the heavy vehicle 14 at the time of the measurement may also be taken into account by further applying a dynamic coefficient applied to the physical data measured by the vision displacement measuring system 12.

Regarding the second category, it is estimated that the light vehicles 15a, 15b, 15c, 15d, 15e have a minimal impact on the set of physical data acquired by the vision displacement measuring system 12 or one or more in-situ sensors as described above. The total load of light vehicles is either discarded, or as a rule of thumb, a correction factor to be applied to measured physical data is determined based on a uniform weight per square meter over the entire length of the bridge roadway.

The third category, where one or more trucks 17a, 17b, for example commercial trucks, are present on the bridge 10, is a generalisation of the first and second categories. It makes the calculation more complex because each truck, more specifically each tire footprint must be taken into account in the load model. This can be done by assessing the position and the parameters of each tire footprint as a function of time and applying the calculation method described in the first category.

In a further embodiment, the trajectory and/or speed of vehicles in the third category is analysed with a vision system to refine the load model. The vision system may be on board of a heavy vehicle. It may also be affixed on the bridge or in its vicinity with a substantially unobstructed view of the lanes open to traffic. In its simplest embodiment, the speed is used to calculate the dynamic load coefficient, optionally in combination with other heavy vehicle information such as the tire pressure and/or the shock absorber spring rate. The trajectory of the heavy vehicle can also be used to correct the load model by taking into account the lateral vehicle position on the bridge (e.g. the lane and direction in which the vehicle is travelling). The position of other vehicles crossing the bridge simultaneously can also be used to further refine the load model.

Advantageously, a map or classification of the pavement features (such as expansion joints, construction joints, potholes, ruts, depressions etc.) with a relevant impact on the structural health of the bridge can be obtained by combining the dataset of the heavy vehicle speed and trajectories with the dataset of sensing device measurements. The effective loading of the bridge (measured with a sensing device) resulting from heavy vehicles rolling over a given feature can be used to classify said pavement features based on their impact of the effective bridge loading, helping to prioritize pavement repairs based on their effective impact on the bridge durability. In its simplest implementation, such a classification is established by recording the location (hereafter "alarm location") of heavy vehicle(s) whenever the output of a sensing device exceeds a given threshold. The pavement features or road deformations located in the bridge regions with the most alarm locations are classified with a higher priority for repair.

In embodiments, multiple sets of integrity data acquired at different time intervals over months or years for a bridge 10 are stored in a database. The health status of the bridge may be classified according to the severity of the deviation between these multiple sets of integrity data. Each classification may correspond to a deviation exceeding a given threshold.

More particularly, using traffic tracking devices on a supervised bridge allows to know the position of the footprints of the heavy vehicle(s) as a function of time and to have an estimate of the position of light vehicles. This knowledge allows the modelling of the load on the bridge at each moment and thus the reconstruction of the expected deflection and its comparison with the observed deflection. This comparison makes it possible to ensure that the structure does not deteriorate by comparing events measured at different times (typically over months or years).

The method disclosed therein is also adapted for monitoring a health status of a plurality of bridges under normal traffic condition, wherein an itinerary is provided to one or more heavy vehicles 14 of the fleet such that one or more heavy vehicles cross one or more bridges on which only scarce integrity data are available in order to acquire one or more sets of integrity data to increase the statistical relevance of the integrity data of these bridges.

A map providing information on the health status of bridges in a given region or country may then be reconstructed based on the integrity data stored in a database and acquired at different time intervals over months or years for each bridge.

## Claims

1. A method for monitoring a health status of one or of a plurality of bridges (10) under normal traffic condition, comprising:
a) providing at least one sensing device (12) per bridge configured to measure a physical quantity variation related to the integrity of said one or said plurality of bridges;
b) providing a fleet of vehicles (14), wherein an estimation of the weight of each vehicle is known with a deviation of no more than 10% of the actual weight of each vehicle,
c) acquiring a set of physical data related to the integrity of said one or said plurality of bridges (10) from said at least one sensing device (12) when at least one vehicle of the fleet crosses one bridge (10);
d) determining the configuration of other vehicles (15a, 15b, 15c, 15d, 15e) on the bridge, if any, when said at least one vehicle (14) of the fleet crosses said one bridge;
e) repeating steps c) and d) in order to acquire multiple sets of physical data related to the integrity of said one or said plurality of bridges (10) so that the number of sets of integrity data associated with one bridge (10) permits to measure or observe a deviation, and
f) obtaining a health status of said one or said plurality of bridges based on the deviation between said multiple sets of physical data associated with one bridge
wherein each vehicle (14) of the fleet of is a heavy vehicle weighing at least 10 tonnes and in that said at least one sensing device is a vision-based displacement measuring system (12).

2. The method according to claim 1, wherein the at least one vision-based displacement measuring system (12) is configured to measure relative or absolute displacement of one or more regions of interest (18) of one bridge when at least one heavy vehicle (14) crosses said one bridge to acquire said set of physical data related to the integrity of said one bridge.

3. The method according to claim 2, wherein at least one optical corner reflector is positioned on a point of interest to achieve high contrast.

4. The method according to claim 2 or 3, wherein the vision-based displacement measuring system (12) comprises a camera (13) and an image processing module (13b), wherein said processing module (13b) is configured to compute the position of at least one point of interest of said one or more regions of interest (18) in the image plane of the camera and to identify any obstruction between the camera (13) and the point(s) of interest in the one or more regions of interest (18) of said one bridge by comparing a reference image template to a current image of said point of interest.

5. The method according to the preceding claim, wherein an image subset is extracted from the current image in the same image region of the image plane as the region used to define the reference image template.

6. The method according to any preceding claim, wherein the configuration of said other vehicles (15a, 15b, 15c, 15d) on the bridge relates to the location and estimated weight of each of said other vehicle (15a, 15b, 15c, 15d, 15e) relative to said at least one heavy vehicle (14).

7. The method according to any preceding claim, wherein an itinerary is provided to one or more heavy vehicles (14) of the fleet such that said one or more heavy vehicles cross one or more bridges in order to acquire one or more sets of integrity data to increase the statistical relevance of the integrity data of these bridges.

8. The method according to any preceding claim, wherein each heavy vehicle of the fleet is equipped with a vision-based system (16) to capture one image or a series of images of the surrounding traffic to determine the number and the configuration of said other vehicles (15a, 15b, 15c, 15d, 15e) on one bridge when said heavy vehicle crosses said one bridge.

9. The method according to the preceding claim, wherein the total weight of said number of other vehicles is estimated based on said one image or said series of images of the surrounding traffic.

10. The method according to any preceding claim, further comprising the step of providing a vision-based system positioned on the bridge or on each bridge and configured to capture one image or a series of images of the traffic on the bridge or on each bridge when at least one heavy vehicle (14) of the fleet crosses said one bridge.

11. The method according to the preceding claim, wherein a trajectory and/or the speed of at least one heavy vehicle (14) is inferred from said series of images.

12. The method according to the preceding claim, wherein said trajectory and/or said speed is used in combination with at least one sensing device output to determine an effective dynamic load coefficient.

13. The method according to any of claims 10 to 12, wherein said vision-based displacement system (12) is configured to also capture one or more images of the traffic on the bridge in order to determine the configuration of said other vehicles (15a, 15b, 15c, 15d, 15e) on one bridge (10) when said heavy vehicle crosses said one bridge.

14. The method according to any preceding claim, wherein the weight of one heavy vehicle of the fleet is measured by a scale located under a surface on which the heavy vehicle stays or travels.

15. The method according to any preceding claim, wherein a unique identifier is assigned to each heavy vehicle (14) of the fleet under step b), and wherein a presence of one or more heavy vehicles of the fleet on one bridge is determined by detecting and/or recognizing said unique identifier.

## Patentansprüche

1. Verfahren zum Überwachen des Gesundheitszustandes einer oder mehrerer Brücken (10) unter normalen Verkehrsbedingungen, umfassend:
a) Bereitstellen mindestens einer Messvorrichtung (12) pro Brücke, die so konfiguriert ist, dass sie eine Änderung einer physikalischen Größe misst, die mit der Integrität der einen oder der mehreren Brücken zusammenhängt;
b) Bereitstellen einer Fahrzeugflotte (14), wobei eine Schätzung des Gewichts jedes Fahrzeugs mit einer Abweichung von nicht mehr als 10% des tatsächlichen Gewichts jedes Fahrzeugs bekannt ist,
c) Erfassen eines Satzes physikalischer Daten, die sich auf die Integrität der einen oder der mehreren Brücken (10) beziehen, von der mindestens einen Messvorrichtung (12), wenn mindestens ein Fahrzeug der Flotte eine Brücke (10) überquert;
d) Bestimmen der Konfiguration anderer Fahrzeuge (15a, 15b, 15c, 15d, 15e) auf der Brücke, falls vorhanden, wenn das mindestens eine Fahrzeug (14) der Flotte die eine Brücke überquert;
e) Wiederholen der Schritte c) und d), um mehrere Sätze physikalischer Daten zu erfassen, die sich auf die Integrität der einen oder der mehreren Brücken (10) beziehen, so dass die Anzahl der Sätze von Integritätsdaten, die einer Brücke (10) zugeordnet sind, es ermöglicht, eine Abweichung zu messen oder zu beobachten, und
f) Erhalten eines Gesundheitszustands der einen oder der mehreren Brücken auf der Grundlage der Abweichung zwischen den mehreren Sätzen von physikalischen Daten, die einer Brücke zugeordnet sind, wobei jedes Fahrzeug (14) der Flotte ein Schwerfahrzeug ist, das mindestens 10 Tonnen wiegt, und wobei die mindestens eine Messvorrichtung ein Vision-basiertes Verschiebungsmesssystem (12) ist.

2. Verfahren nach Anspruch 1, wobei das mindestens eine Vision-basierte Verschiebungsmesssystem (12) so konfiguriert ist, dass es die relative oder absolute Verschiebung eines oder mehrerer Bereiche von Interesse (18) einer Brücke misst, wenn mindestens ein Schwerfahrzeug (14) die eine Brücke überquert, um den Satz physikalischer Daten in Bezug auf die Integrität der einen Brücke zu erfassen.

3. Verfahren nach Anspruch 2, bei dem mindestens ein optischer Eckreflektor auf einen Punkt von Interesse positioniert wird, um einen hohen Kontrast zu erzielen.

4. Verfahren nach Anspruch 2 oder 3, wobei das Vision-basierte Verschiebungsmesssystem (12) eine Kamera (13) und ein Bildverarbeitungsmodul (13b) umfasst, wobei das Verarbeitungsmodul (13b) so konfiguriert ist, dass es die Position mindestens eines Punktes von Interesse des einen oder der mehreren Bereiche von Interesse (18) in der Bildebene der Kamera berechnet und jedes Hindernis zwischen der Kamera (13) und dem/den Punkt(en) von Interesse in dem einen oder den mehreren Bereichen (18) von Interesse der einen Brücke durch Vergleichen einer Referenzbildvorlage mit einem aktuellen Bild des Punktes von Interesse identifiziert.

5. Verfahren nach dem vorhergehenden Anspruch, wobei eine Bildteilmenge aus dem aktuellen Bild in demselben Bildbereich der Bildebene extrahiert wird wie der Bereich, der zur Definition der Referenzbildvorlage verwendet wurde.

6. Verfahren nach einem der vorhergehenden Ansprüche, wobei sich die Konfiguration der anderen Fahrzeuge (15a, 15b, 15c, 15d) auf der Brücke auf die Position und das geschätzte Gewicht jedes der anderen Fahrzeuge (15a, 15b, 15c, 15d, 15e) relativ zu dem mindestens einen Schwerfahrzeug (14) bezieht.

7. Verfahren nach einem der vorhergehenden Ansprüche, wobei einem oder mehreren Schwerfahrzeugen (14) der Flotte eine Route vorgegeben wird, so dass das eine oder die mehreren Schwerfahrzeuge eine oder mehrere Brücken überqueren, um einen oder mehrere Sätze von Integritätsdaten zu erfassen, um die statistische Relevanz der Integritätsdaten dieser Brücken zu erhöhen.

8. Verfahren nach einem der vorhergehenden Ansprüche, wobei jedes Schwerfahrzeug der Flotte mit einem Visions-basierten System (16) ausgestattet ist, um ein Bild oder eine Reihe von Bildern des umgebenden Verkehrs zu erfassen, um die Anzahl und die Konfiguration der anderen Fahrzeuge (15a, 15b, 15c, 15d, 15e) auf einer Brücke zu bestimmen, wenn das Schwerfahrzeug die eine Brücke überquert.

9. Verfahren nach dem vorhergehenden Anspruch, wobei das Gesamtgewicht der Anzahl der anderen Fahrzeuge auf der Grundlage des einen Bildes oder der Serie von Bildern des umgebenden Verkehrs geschätzt wird.

10. Das Verfahren nach einem der vorhergehenden Ansprüche, weiters umfassend den Schritt des Bereitstellens eines Visions-basierten Systems, das auf der Brücke oder auf jeder Brücke positioniert ist und derart konfiguriert ist, dass es ein Bild oder eine Reihe von Bildern des Verkehrs auf der Brücke oder auf jeder Brücke aufnimmt, wenn mindestens ein Schwerfahrzeug (14) der Flotte die eine Brücke überquert.

11. Verfahren nach dem vorhergehenden Anspruch, wobei aus der Bildserie eine Trajektorie und/oder die Geschwindigkeit mindestens eines Schwerfahrzeugs (14) abgeleitet wird.

12. Verfahren nach dem vorhergehenden Anspruch, bei dem die Trajektorie und/oder die Geschwindigkeit in Kombination mit mindestens einer Ausgabe einer Messeinrichtung verwendet wird, um einen effektiven dynamischen Lastkoeffizienten zu bestimmen.

13. Verfahren nach einem der Ansprüche 10 bis 12, wobei das Visionsbasierte Verschiebungssystem (12) so konfiguriert ist, dass es auch ein oder mehrere Bilder des Verkehrs auf der Brücke aufnimmt, um die Konfiguration der anderen Fahrzeuge (15a, 15b, 15c, 15d, 15e) auf einer Brücke (10) zu bestimmen, wenn das Schwerfahrzeug diese eine Brücke überquert.

14. Verfahren nach einem der vorhergehenden Ansprüche, wobei das Gewicht eines Schwerfahrzeugs der Flotte mit einer Waage gemessen wird, die sich unter einer Fläche befindet, auf der das schwere Fahrzeug befindet oder fährt.

15. Verfahren nach einem der vorhergehenden Ansprüche, wobei in Schritt b) jedem Schwerfahrzeug (14) der Flotte eine eindeutige Kennung zugewiesen wird, und wobei die Anwesenheit eines oder mehrerer Schwerfahrzeuge der Flotte auf einer Brücke durch Erfassen und/oder Erkennen der eindeutigen Kennung bestimmt wird.

## Revendications

1. Une méthode pour monitorer l'état de santé d'un ou de plusieurs ponts (10) dans des conditions normales de circulation, comprenant :
a) fournir au moins un dispositif de détection (12) par pont configuré pour mesurer une variation de quantité physique liée à l'intégrité dudit pont ou de ladite pluralité de ponts ;
b) fournir une flotte de véhicules (14), dans laquelle une estimation du poids de chaque véhicule est connue avec un écart ne dépassant pas 10 % du poids réel de chaque véhicule,
c) acquérir un ensemble de données physiques relatives à l'intégrité dudit pont ou de ladite pluralité de ponts (10) à partir dudit au moins un dispositif de détection (12) lorsqu'au moins un véhicule de la flotte traverse un pont (10) ;
d) déterminer la configuration des autres véhicules (15a, 15b, 15c, 15d, 15e) sur le pont, le cas échéant, lorsque ledit au moins un véhicule (14) de la flotte traverse ledit pont ;
e) répéter les étapes c) et d) afin d'acquérir de multiples ensembles de données physiques relatives à l'intégrité dudit pont ou de ladite pluralité de ponts (10) de sorte que le nombre d'ensembles de données d'intégrité associé à un pont (10) permette de mesurer ou d'observer une déviation, et
f) obtenir un état de santé dudit pont ou de ladite pluralité de ponts sur la base de la déviation entre lesdits multiples ensembles de données physiques associés à un pont,
dans laquelle chaque véhicule (14) de la flotte est un véhicule lourd pesant au moins 10 tonnes, ledit au moins un dispositif de détection étant un système de mesure de déplacement basé sur la vision (12).

2. La méthode selon la revendication 1, dans laquelle le au moins un système de mesure de déplacement basé sur la vision (12) est configuré pour mesurer le déplacement relatif ou absolu d'une ou plusieurs régions d'intérêt (18) d'un pont lorsqu'au moins un véhicule lourd (14) traverse ledit pont afin d'acquérir ledit ensemble de données physiques relatives à l'intégrité dudit pont.

3. La méthode selon la revendication 2, dans laquelle au moins un réflecteur optique d'angle est positionné sur un point d'intérêt pour obtenir un contraste élevé.

4. La méthode selon la revendication 2 ou 3, dans laquelle le système de mesure de déplacement basé sur la vision (12) comprend une caméra (13) et un module de traitement d'image (13b), dans laquelle ledit module de traitement (13b) est configuré pour calculer la position d'au moins un point d'intérêt de ladite une ou plusieurs régions d'intérêt (18) dans le plan d'image de la caméra et pour identifier toute obstruction entre la caméra (13) et le(s) point(s) d'intérêt dans la ou plusieurs régions d'intérêt (18) dudit pont en comparant un modèle d'image de référence à une image actuelle dudit point d'intérêt.

5. La méthode selon la revendication précédente, dans laquelle un sous-ensemble d'image est extrait de l'image actuelle dans la même région du plan de l'image que la région utilisée pour définir le modèle d'image de référence.

6. La méthode selon l'une des revendications précédentes, dans laquelle la configuration desdits autres véhicules (15a, 15b, 15c, 15d) sur le pont se rapporte à l'emplacement et au poids estimé de chacun desdits autres véhicules (15a, 15b, 15c, 15d, 15e) par rapport audit au moins un véhicule lourd (14).

7. La méthode selon l'une des revendications précédentes, dans laquelle un itinéraire est fourni à un ou plusieurs véhicules lourds (14) de la flotte de telle sorte que ledit un ou plusieurs véhicules lourds traversent un ou plusieurs ponts afin d'acquérir un ou plusieurs ensembles de données d'intégrité pour augmenter la pertinence statistique des données d'intégrité de ces ponts.

8. La méthode selon l'une des revendications précédentes, dans laquelle chaque véhicule lourd de la flotte est équipé d'un système de vision (16) pour capturer une image ou une série d'images du trafic environnant afin de déterminer le nombre et la configuration des autres véhicules (15a, 15b, 15c, 15d, 15e) sur un pont lorsque ledit véhicule lourd traverse ledit pont.

9. La méthode selon la revendication précédente, dans laquelle le poids total dudit nombre d'autres véhicules est estimé sur la base de ladite image ou de ladite série d'images du trafic environnant.

10. La méthode selon l'une des revendications précédentes, comprenant en outre l'étape consistant à fournir un système de vision positionné sur le pont ou sur chaque pont et configuré pour capturer une image ou une série d'images du trafic sur le pont ou sur chaque pont lorsqu'au moins un véhicule lourd (14) de la flotte traverse ledit pont.

11. La méthode selon la revendication précédente, dans laquelle une trajectoire et/ou la vitesse d'au moins un véhicule lourd (14) est déduite de ladite série d'images.

12. La méthode selon la revendication précédente, dans laquelle ladite trajectoire et/ou ladite vitesse est utilisée en combinaison avec au moins une sortie de dispositif de détection pour déterminer un coefficient de charge dynamique effectif.

13. La méthode selon l'une des revendications 10 à 12, dans laquelle ledit système de mesure de déplacement basé sur la vision (12) est configuré pour capturer également une ou plusieurs images du trafic sur le pont afin de déterminer la configuration des autres véhicules (15a, 15b, 15c, 15d, 15e) sur un pont (10) lorsque ledit véhicule lourd traverse ledit pont.

14. La méthode selon l'une des revendications précédentes, dans laquelle le poids d'un véhicule lourd de la flotte est mesuré par une balance située sous une surface sur laquelle le véhicule lourd repose ou se déplace.

15. La méthode selon l'une des revendications précédentes, dans laquelle un identifiant unique est attribué à chaque véhicule lourd (14) de la flotte à l'étape b), et dans laquelle la présence d'un ou de plusieurs véhicules lourds de la flotte sur un pont est déterminée par la détection et/ou la reconnaissance dudit identifiant unique.
